**Europäisches Patentamt**

**European Patent Office**

**Office européen des brevets**

(19)

(11) Veröffentlichungsnummer: **0 157 005**
**A2**

(12) # EUROPÄISCHE PATENTANMELDUNG

(21) Anmeldenummer: **84116268.8**

(22) Anmeldetag: **22.12.84**

(51) Int. Cl.⁴: **B 23 D 59/00,** B 27 B 9/04

(30) Priorität: **06.04.84 DE 8410794 U**

(43) Veröffentlichungstag der Anmeldung: **09.10.85**
**Patentblatt 85/41**

(84) Benannte Vertragsstaaten: **DE GB NL**

(71) Anmelder: **ROBERT BOSCH GMBH, Postfach 50,**
**D-7000 Stuttgart 1 (DE)**

(72) Erfinder: **Kuhlmann, Gerhard, Hohewartstrasse 74,**
**D-7000 Stuttgart 30 (DE)**
Erfinder: **Wolf, Erwin, Dipl.-Ing., Rosenhain 6,**
**D-7153 Weissach I.T. (DE)**

(54) **Führungsvorrichtung für eine Handwerkzeugmaschine.**

(57) Es wird eine Führungsvorrichtung für eine Handwerkzeugmaschine (1, 20) vorgeschlagen, die eine Fußplatte (5, 24) und eine in dieser geführte und an dieser festklemmbare Führungsschiene (10, 27), z.B. mit einem Parallelanschlag (11, 29) hat. Die Fußplatte (5, 24) hat nur die üblichen Führungsdurchbrüche (8, 9) in ihren Randteilen (6, 7, 25), in die die Führungsschiene (10, 27) eingeschoben werden kann. Die Klemmvorrichtung (12, 30, 41) ist auf die Führungsschiene (10, 27) aufgeschoben und auf dieser festklemmbar. Ein Klemmvorsprung (19, 33, 47) der Klemmvorrichtung (12, 30, 41) kann einen Rand (6, 7, 25) der Fußplatte (5, 24) übergreifen und so die Führungsschiene (10, 27) an der Fußplatte (5, 24) festklemmen. Dadurch rückt die Handhabe (14, 38, 50) zum Festklemmen aus dem engen Raum zwischen der Fußplatte (5, 24) und dem Maschinengehäuse (1, 20) heraus und ist besser zugänglich. Außerdem braucht die Grundausstattung der Handwerkzeugmaschine die Klemmvorrichtung nicht zu umfassen. Es werden für den Kunden unnötige Kosten gespart, der nicht mit einer Führungsvorrichtung arbeiten will.

EP 0 157 005 A2

R. 19316

28.2.1984 Br/Le

0157005

ROBERT BOSCH GMBH, 7000 STUTTGART 1

## Führungsvorrrichtung für
eine Handwerkzeugmaschine

Stand der Technik

Die Erfindung geht aus von einer Führungsvorrichtung
für eine Handwerkzeugmaschine nach der Gattung des
Hauptanspruchs. Es sind schon solche Führungsvorrichtungen für Parallelschnitte und Kreisschnitte
bekanntgeworden, bei denen die Fußplatte der Handwerkzeugmaschine eine Halterung und eine Klemmvorrichtung für eine Führungsschiene besitzt. Die Fußplatte muß für die Arbeit mit der handgeführten Handwerkzeugmaschine meist relativ schmal gehalten werden,
um bei randnahen Schnitten nicht hinderlich zu sein.
Zudem trägt sie Vorrichtungen zum Schwenken der Grundplatte gegenüber dem Maschinenkörper und Festhalten
der Fußplatte in der gewählten Einstellage. Besonders
bei Stichsägen aber auch bei Handkreissägen ist deshalb der Raum an der Oberseite der Fußplatte, zwischen
der Fußplatte und dem Maschinenkörper und in der
Nähe der Führungsschiene, relativ eng. Das Festklemmen

. . .

und Lösen der Führungsschiene ist daher verhältnismäßig schwierig und umständlich. Außerdem macht es
diese Anordnung erforderlich, jede Handwerkzeugmaschine in der Grundaustattung schon mit der Klemmvorrichtung auszustatten, obwohl diese vom Benutzer
vielleicht nicht benötigt wird. Schließlich gehen
bewegliche Teile der Klemmvorrichtung leicht verloren.

Vorteile der Erfindung

Die erfindungsgemäße Führungsvorrichtung mit den
kennzeichnenden Merkmalen des Hauptanspruchs hat
demgegenüber den Vorteil, daß die Klemmvorrichtung
der als Zubehör zählenden Führungsschiene selbst
zugeordnet und deren Handhabe außerhalb des engen
Raumes zwischen der Fußplatte und dem Maschinenkörper angeordnet werden kann. Durch den Klemmvorsprung zum Übergreifen eines Teils der Fußplatte
rückt die Klemmschraube oder dgl. Klemmittel und
deren Handhabe seitlich weg von der Fußplatte. Sie
ist so frei zugänglich und kann auch mit Schutzhandschuhen betätigt werden. Die Fußplatte braucht
nur noch Führungsöffnungen in ihren Seitenwänden
zu haben, in die die Führungsschiene eingeschoben
werden kann. Die Klemmvorrichtung kann mit der
Führungsschiene als Zubehör geliefert werden.

Durch die in den Unteransprüchen aufgeführten Maßnahmen sind vorteilhafte Weiterbildungen und Verbesserungen der im Hauptanspruch angegebenen
Führungsvorrichtung möglich. Besonders vorteilhaft ist eine einstückig aus Federbandstahl gefertige Klammer
mit zwei die Führungsschiene umgreifenden Lappen, die
in ihrem Mittelteil ein Gewinde für eine Klemmschraube
aufnimmt und einen dritten Lappen hat, der in Richtung
der Führungsschiene verläuft, den Klemmvorsprung hat
und federnd gegen die Klemmschraube vorgespannt ist.

Zeichnung

Mehrere Ausführungsbeispiele des Erfindungsgegenstandes
sind in der Zeichnung dargestellt und in der nachfolgenden Beschreibung näher erläutert. Es zeigen
Figur 1 eine perspektivische Darstellung einer Stichsäge mit einer erfindungsgemäßen Führungsvorrichtung,
Figur 2 eine Einzelheit der Führungsvorrichtung in
der Seitenansicht teilweise geschnitten, Figur 3
eine Ansicht zu Figur 2 in Richtung X, Figur 4 in
einem anderen Ausführungsbeispiel eine perspektivische
Darstellung einer Handkreissäge mit der erfindungsgemäßen Führungsvorrichtung, mit einer Klemmvorrichtung
nach den Figuren 1 bis 3, Figur 5 als weiteres Beispiel einer Klemmvorrichtung eine solche mit einer
gespritzten, gepreßten oder gegossenen Klammer und
mit besonderer Anordnung der Klemmschraube in der
Seitenansicht, Figur 6 einen Schnitt zu Figur 5, Figur
7 eine Draufsicht zu Figur 5 und Figur 8 einen Schnitt
durch eine weitere mögliche Ausführungsform für eine
Klemmvorrichtung zur erfindungsgemäßen Führungsvorrichtung.

...

193
0157005

Beschreibung der Ausführungsbeispiele

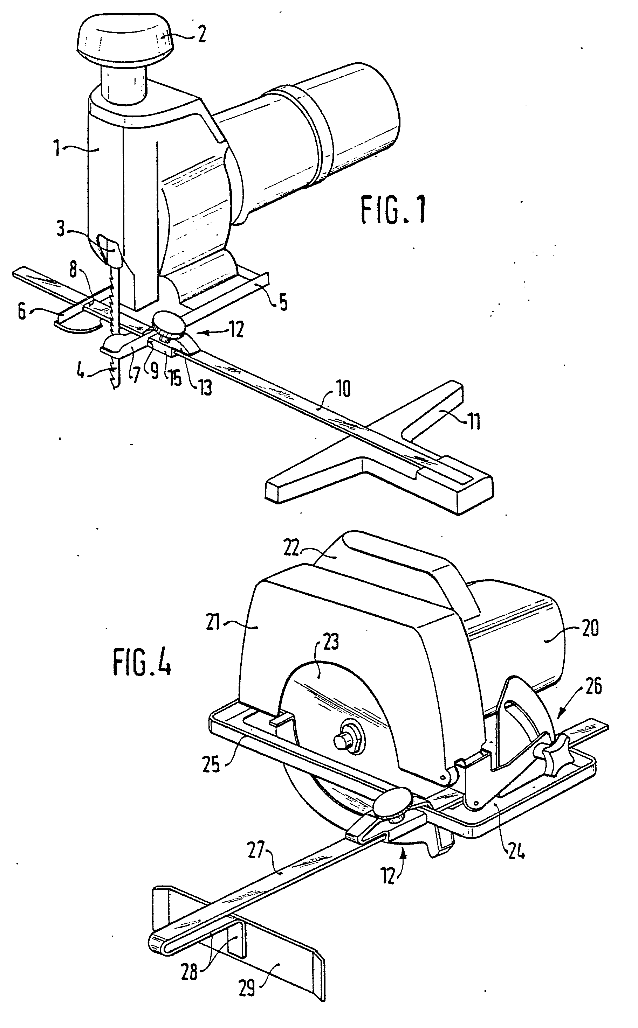

Das Ausführungsbeispiel nach den Figuren 1 bis 3 zeigt
eine als Stichsäge ausgebildete Handwerkzeugmaschine
mit einem Maschinenkörper 1, einer Zusatzhandhabe 2,
einer Hubstange 3, einem in diese eingespannten Stichsägeblatt 4 und einer schwenkbar mit dem Maschinenkörper
verbundenen Fußplatte 5. Die Fußplatte 5 besitzt hochgezogene Ränder 6 und 7 in die rechteckige Ausnehmungen
8 und 9 eingearbeitet sind. Durch diese Ausnehmungen 8
und 9 ist eine Führungsschiene 10 hindurchgeschoben. Das
freie Ende der Führungsschiene 10 trägt einen Parallelanschlag 11. Ebenfalls auf die Führungsschiene 10 aufgeschoben ist eine Klemmvorrichtung 12. Diese Klemmvorrichtung 12 besteht im einzelnen aus einer Klammer 13
und einer Klemmschraube 14. Die Klammer 13 hat zwei
Lappen 15 und 16 die von ihrem Mittelteil aus die
Führungsschiene 10 nach unten umfassen. Im Mittelteil
der Klammer 13 befindet sich ein Gewindetubus 17, in
den die Klemmschraube 14 eingeschraubt werden kann. Ein
dritter Lappen 18 der Klammer 13 verläuft in Längsrichtung der Führungsschiene und ist von der der Fußplatte 5 abgewendeten Seite der Klammer 13 über den
Gewindetubus 17 hinweg abgebogen, hin zur Fußplatte
5. Über dem Gewindetubus 17 besitzt dieser Lappen 18
eine Durchgangsbohrung für den Schraubenbolzen der
Klemmschraube 14. Das freie Ende des Lappens 18 bildet
einen hakenförmigen Klemmvorsprung 19, der einen der
Ränder 6, 7 der Fußplatte 5 übergreifen kann. Die Klammer
13 ist aus Federbandstahl angefertigt. Der Lappen 18
liegt unter Federspannung am Kopf der Klemmschraube 14
an.

Zum Einstellen des Abstandes zwischen dem Stichsägeblatt 4 und dem Parallelanschlag 11 ist die Klemmschraube 14 so weit gelöst, daß der Klemmvorsprung
19 wohl den ihm zugeordneten Rand der Fußplatte 5
hält, die Führungsschiene 10 aber noch nicht festgeklemmt ist. Nach dem Einstellen des gewünschten Abstandes wird die Klemmschraube 14 weiter angezogen,
so daß die von der Handhabe der Klemmschraube 14 abgewendete Stirnseite des Gewindebolzens dieser Klemmschraube 14 auf die Führungsschiene drückt. So
werden die Fußplatte 5 und die Führungsschiene
mittels der Klemmvorrichtung 12 miteinander verklemmt. Zum Abnehmen der Führungsschiene 10 muß
die Klemmschraube 14 so weit gelöst werden, daß auch
der Klemmvorsprung 19 der Klammer 13 über den ihm
zugeordneten Rand der Fußplatte 5 gehoben werden kann.
Dann kann man die Führungsschiene 10 aus den Ausnehmungen 8 und 9 herausziehen. Die so entfernte
Führungsvorrichtung mit der Führungsschiene und
dem Parallelanschlag 11 trägt die Klemmvorrichtung
12, die man mittels der Klemmschraube 14 unverlierbar
auf der Führungsschiene 10 festklemmen kann.

Das Ausführungsbeispiel nach Figur 4 zeigt eine
Handkreissäge als Handwerkzeugmaschine mit einem
Maschinengehäuse 20, einer Schutzhaube 21, einem
Handgriff 22 und einem Kreissägeblatt 23. Mit der
Schutzhaube 21 ist eine Fußplatte 24 verbunden,
die ebenfalls hochgezogene Ränder 25 hat. Eine

...

0157005

Neigungsvorrichtung 26 gestattet das Verstellen der
Fußplatte 24 in einem Winkelbereich von 45°. In diesem
Ausführungsbeispiel ist eine Führungsschiene 27 anstelle der Führungsschiene 10 verwendet, an die ein
Halter 28 für einen Parallelanschlag 29 angeformt
ist. Als Klemmvorrichtung ist die gleiche Klemmvorrichtung 12 verwendet wie im ersten Ausführungsbeispiel nach den Figuren 1 bis 3. Hier wird das vorteilhafte der Anordnung der Klemmvorrichtung 12 neben
der Fußplatte 24 besonders deutlich. Mit dieser
Lösung hat die Neigungsvorrichtung 26 genügend
Platz auf der Oberfläche der Fußplatte 24. Die Figuren
5 bis 7 zeigen eine andere Ausführung einer Klemmvorrichtung, die mit 30 bezeichnet ist und auch in
Kunststoff ausgeführt werden kann. Ein Klemmstück
31 ist mit einem Bügel 32 versehen, durch den eine
Führungs-Schiene 10 bzw. 27 hindurchgeführt werden
kann. Ein Klemmvorsprung 33 besitzt eine auf die Ränder
6, 7, 25 passende Nut 34. Der Mittelteil des Klemmstücks
31 hat eine Gewindebohrung 35. Diese ist umgeben mit
einem zylindrischen Vorsprung 36. In die Gewindebohrung 35 ist von der Schienenseite her eine Klemmschraube 37 eingeschraubt. Deren Rändelkopf 38 besitzt
an seiner dem Klemmstück 31 zugewendeten Stirnfläche
eine Ausdrehung 39, in die der Vorsprung 36 paßt. In
diese Ausdrehung 39 ist eine federnde und/oder weichelastische Scheibe 40 eingelegt. Sie dient als Drehsicherung für die Klemmschraube 37.

Mit dieser Klemmvorrichtung 30 ist eine komplette, aus
Kunststoff herstellbare Lösung gefunden, die keine

...

sperrig vorstehenden Teile hat. Zum Festklemmen der
Führungsschienen 10 bzw. 27 stützt sich der Rändelkopf 38 der Klemmschraube 37 an der Schienenoberfläche ab. Die über die Schienen und Klemmstückbreite hinaus ragenden Teile des Rändelkopfes 38
bieten genügend griffige Handhaben.

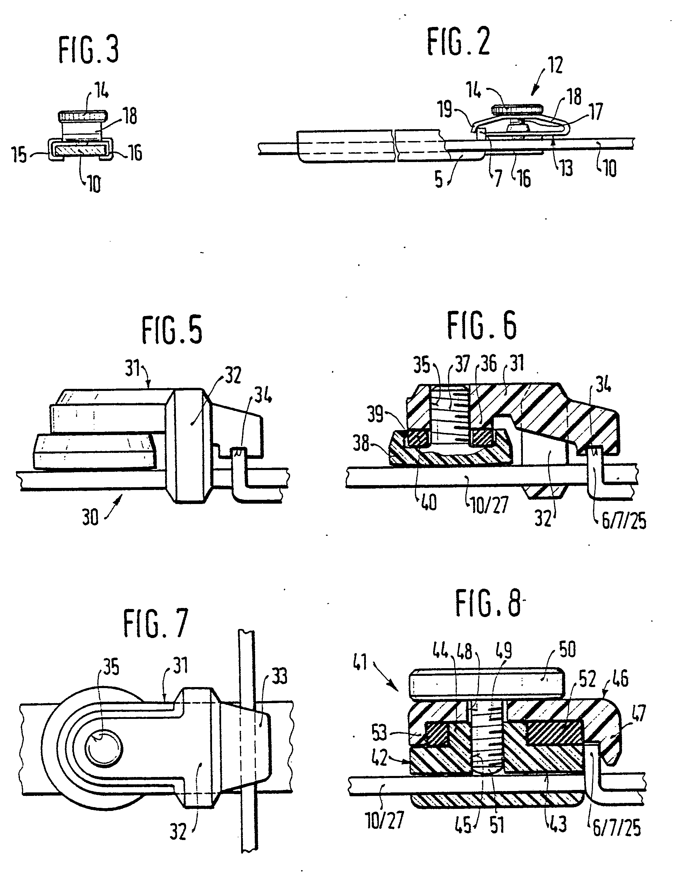

Figur 8 zeigt ein weiteres Ausführungsbeispiel für
eine Klemmvorrichtung, das mit 41 bezeichnet ist.
Ein Klemmbügel 42 besitzt einen Tunnel 43 zur Aufnahme einer Führungsschiene 10 oder 27. Weiter hat
er einen zylindrischen Vorsprung 44 zu dem zentrisch
eine Gewindebohrung 45 angeordnet ist. Über diesem
Klemmbügel 42 ist ein Klemmstück 46 angeordnet, das
einen hakenförmigen Klemmvorsprung 47 hat. Durch
ein Durchgangsloch 48 in dem Klemmstück 46 ist eine
Klemmschraube 49 in die Gewindebohrung 45 eingeschraubt. Deren Kopf 50 ist ebenfalls durch ein
Rändel griffig gemacht. Eine Kuppe 51 der Klemmschraube 49 kann den Klemmbügel 42 auf der Führungsschiene 10/27 festklemmen. Zugleich drückt dann
der Kopf 50 der Klemmschraube 49 das Klemmstück 46
mit seinem Klemmvorsprung 47 auf einen Rand 6/7/25
einer Fußplatte 5/24. Ein federndes und/oder elastiches Bauelement 52 ist zwischen den Klemmbügel
42 und das Klemmstück 46 um den Vorsprung 44 herum
eingelegt. Eine Stütznase 53 des Klemmstücks 46
legt auf ihrer Seite den Mindestabstand zwischen
dem Klemmbügel 42 und dem Klemmstück 46 fest.

R. **19316**

28.2.1984 Br/Le

0157005

ROBERT BOSCH GMBH, 7000 STUTTGART 1

Ansprüche

1. Führungsvorrichtung für eine Handwerkzeugmaschine
mit einer an der Maschine befestigten Fußplatte, mit
einer mit der Fußplatte verbindbaren Führungsschiene,
die in Führungsöffnungen der Fußplatte einschiebbar
und durch Klemmen in einer Einschiebestellung festlegbar ist, dadurch gekennzeichnet, daß die Führungsschiene (10, 27) eine Klemmvorrichtung (12, 30, 41)
trägt, die auf der Führungsschiene (10, 27) verschiebbar gelagert, mit einem Klemmvorsprung (19,
33, 47) zum Übergreifen eines Teils der Fußplatte
(5, 24) von der Führungsschiene (10, 27) her versehen und mit einer Klemmschraube (14, 37, 49), einem
Klemmhebel oder dgl. Klemmittel ausgerüstet ist.

2. Führungsvorrichtung nach Anspruch 1, dadurch
gekennzeichnet, daß die Klemmvorrichtung eine
Klammer (13) mit zwei die Führungsschiene (10) umgreifenden Lappen (15, 16), einem in Richtung der
Führungsschiene (10) verlaufenden, den Klemmvorsprung (19) habenden dritten Lappen (18) und eine
in einen Mittelteil dieser Klammer (13) eingeschraubte,
den dritten Lappen (18) in Klemmstellung drängende

...

Klemmschraube (14) umfaßt.

3. Führungsvorrichtung nach Anspruch 2, dadurch gekennzeichnet, daß die Klammer (13) aus Federbandstahl einstückig gefertigt ist.

4. Führungsvorrichtung nach einem der Ansprüche 1 bis 3, dadurch gekennzeichnet, daß der Klemmvorsprung (19) hakenförmig ausgebildet ist.

5. Führungsvorrichtung nach einem der Ansprüche 1 bis 4, dadurch gekennzeichnet, daß die Klemmvorrichtungen federnde Teile (18, 40, 52) umfaßt, deren Federkraft entgegen der Richtung der Klemmkraft des Klemmittels (Klemmschraube 14, 37, 49) wirkt.

6. Führungsvorrichtung nach Anspruch 1, dadurch gekennzeichnet, daß die Klemmvorrichtung einen auf die Führungsschiene (10, 27) aufschiebbaren Klemmbügel (32, 42) und ein Klemmstück (31) zum Verspannen der Führungsschiene (10, 27) mit der Fußplatte (5, 24) und/oder zum Festklemmen der Klemmvorrichtung an der Führungsschiene (10, 27) und ein Klemmittel (Klemmschraube 14, 37, 49 Klemmexzenter oder dgl.) umfaßt.

7. Führungsvorrichtung nach Anspruch 6, dadurch gekennzeichnet, daß der Klemmbügel (32) und das Klemmstück (31) einstückig hergestellt. z.B. aus Kunststoff gepreßt sind.

8. Führungsvorrichtung nach einem der Ansprüche 1 bis 7, dadurch gekennzeichnet, daß eine Klemmschraube (14, 37, 49) mit dem abgerundeten Ende (51) ihres Gewindebolzens (49) gegen die Führungsschiene (10, 2)) drückend eingeschraubt ist.

...

9. Führungsvorrichtung nach einem der Ansprüche 1 bis 8, dadurch gekennzeichnet, daß eine Klemmschraube (49) mit ihrem als Handhabe dienenden Kopf (50) gegen die Führungsschiene (10, 27) drückend eingeschraubt ist.

10. Führungsvorrichtung nach Anspruch 9, dadurch gekennzeichnet, daß der Kopf (50) der Klemmschraube (49) an ihrer dem Klemmstück (31) zugewendeten Stirnfläche eine Ausdrehung (39) und das Klemmstück (31) einen in diese Ausdrehung (39) passenden Vorsprung (44) haben.

11. Führungsvorrichtung insbesondere nach Anspruch 10, dadurch gekennzeichnet, daß zwischen den Kopf (50) und das Klemmstück (46) ein federndes und/oder elastisches Mittel (52, Weichgummischeibe oder dgl.) eingelegt ist.

12. Führungsvorrichtung nach Anspruch 6, dadurch gekennzeichnet, daß der Klemmbügel (42) und das Klemmstück (46) getrennte Teile sind, die von einer Klemmschraube (49) zusammengehalten werden und zwischen die ein federndes und/oder elastisches Mittel (52) eingelegt ist.

FIG.1

FIG.4

0157005

FIG.3

FIG.2

FIG.5

FIG.6

FIG.7

FIG.8